# EUROPEAN PATENT APPLICATION

(11) **EP 2 458 503 A1**
(43) Date of publication of application: **30.05.2012**
(21) Application number: 10192779.6
(22) Date of filing: 26.11.2010
(51) Int. Cl.: G06F 11/00

(54) **System and method for disabling or enabling a watchdog timer**

(71) Applicant: NXP B.V., 5656 AG Eindhoven (NL)
(72) Inventor: Van Dijk, Luc, Redhill, Surrey RH1 1DL (GB)
(74) Representative: Hardingham, Christopher Mark

(57) **Abstract**

A timeout signal generator 100 includes a watchdog 14 used to generate a reset signal after a timeout period unless the timeout period is restarted by a further digital circuit which is typically a microcontroller or microprocessor. The watchdog 14 can be enabled during normal operation or disabled, typically during software development of a system including the watchdog or during the programming of the microcontroller. This is conventionally done by connecting the enable signal to a dedicated pin or multiplexing the pin. A dedicated pin can increase the cost of the timing signal generator. Multiplexing the pin can result in transients which may unintentionally disable the watchdog. A timeout signal generator is described which includes a non-volatile memory to control the enable / disable line of the watchdog 14.

## Description

### FIELD

This invention relates to timeout signal generators for generating a reset signal.

### BACKGROUND

Digital or mixed-signal circuits and systems controlled by a microprocessor or microcontroller can include a watchdog timer. A watchdog timer is a timer or counter which must be triggered before a certain time limit otherwise it generates a pulse which typically is used to reset a system. The triggering can be done for example by a microcontroller external to the device, which is connected to the timeout signal generator by a bus such as a serial peripheral interface (SPI) bus. The triggers generated by the external microcontroller are used as verification that the microcontroller is still operational and software is running. Such verification is useful when, for example the microprocessor locks up due to an unforeseen software and/or hardware condition. Absent a suitable trigger, the watchdog will timeout and then generate a reset signal which puts the system back into a known state so that the system doesn't perform unintended actions. The watchdog trigger can also be required to occur within a periodic window, the remainder of the principle being the same. Such a watchdog is known as a window watchdog. When the watchdog is not triggered in time, a reset signal is generated that can reset a microcontroller for example and/or other external devices. Such a system is particularly useful in applications which require reliable operation of systems for example in control systems for motor vehicles.

Although during normal operation of the application the watchdog timer is enabled all the time, during software development it is often preferred to disable the watchdog to prevent unwanted system resets being generated while developing or testing parts of the system. In addition, when programming the microcontroller the watchdog is normally disabled, since during the (long) programming time, the microcontroller is not operational and cannot generate triggers for the watchdog. This means that it must be possible to enable or disable the watchdog timer.

One known solution is to use a dedicated pin on the timeout signal generator to enable or disable the device. This can be tied to either power or ground dependent on the polarity of the enable signal when in the final application, but can be switched between the two states during software development or when a microcontroller is being programmed. However, this requires an extra pin which may not be available or desirable for small low cost packages.

An alternative solution multiplexes a functional pin so that it can be used to enable or disable the watchdog. This is typically done by adding a comparator to the circuit to compare the voltage level with a reference. The voltage applied to disable the watchdog will be intentionally out of the normal operation voltage range of the functional pin.

This has the advantage that no extra pins are required on the device. However, because the pin is still required in normal use, it may not be possible for the pin to be tied to power or ground so there maybe transients on the pin which cause the timer to be disabled unintentionally.

### SUMMARY

The invention is defined in the accompanying claims. In a first aspect there is described a timeout signal generator for resetting a digital circuit, the timeout signal generator comprising: a non-volatile memory; a watchdog coupled to the non-volatile memory; wherein the watchdog is configured to be either enabled or disabled dependent on the logic state of the non-volatile memory.

The non-volatile memory retains the state during a power off on cycle so stays disabled or enabled determined by the preceding change of state. The state of the non volatile memory can be changed without the need for any additional pins.

Embodiments of a timeout signal generator comprise a controller coupled to the non-volatile memory, wherein the controller is configured to change the logic state of the non-volatile memory.

In embodiments of the timeout signal generator, the controller further comprises a register interface configured to be programmed from a further digital circuit, wherein the controller is configured to receive enable/disable command data from the further digital circuit, store the data in the register interface and alter the logic state of the non-volatile memory.

A register interface may allow the device to be controlled from a further digital circuit which can be internal or external to the timeout signal generator. A further digital circuit may send an enable or disable command data to the timeout signal generator or alternatively and without limitation read the state of the non-volatile memory to check whether the watchdog is enabled or disabled. The non-volatile memory can be implemented using flash memory or other suitable non-volatile memory structure.

In embodiments, the further digital circuit can be a microcontroller or microprocessor.

In other embodiments the register interface can be coupled to the microcontroller using a serial peripheral interface, which allows the non-volatile memory to be programmed for instance from a 4 pin interface, which might also be useable for other functions in the timeout signal generator.

In embodiments the controller of the timeout signal generator comprises a digital key verification circuit. By embedding a digital key in an enable/disable command, the likelihood that a spurious command will accidentally disable the watchdog is greatly reduced.

In a second aspect, there is provided a method of controlling a timeout signal generator comprising a non-volatile memory, and a watchdog coupled to the non-volatile memory, the method comprising configuring the non-volatile memory to a first state, wherein the first state enables the watchdog.

In embodiments the method further comprises configuring the non-volatile memory to a second state; wherein the second state disables the watchdog.

In embodiments the timeout signal generator further comprises a controller coupled to the non-volatile memory configured to store enable/disable command data in the non-volatile memory, the controller comprising a digital key verification circuit, and the method further comprises configuring the non-volatile memory to one of the first state or the second state only when the enable/disable command data contains the correct digital key.

Further embodiments of the invention will now be described in detail by way of example only and illustrated by the accompanying drawings in which:
Figure 1 illustrates an example a timeout signal generator.
Figure 2 illustrates a timeout signal generator according to a further embodiment.
Figure 3 shows an integrated circuit with a timeout signal generator according to a further embodiment

### DESCRIPTION

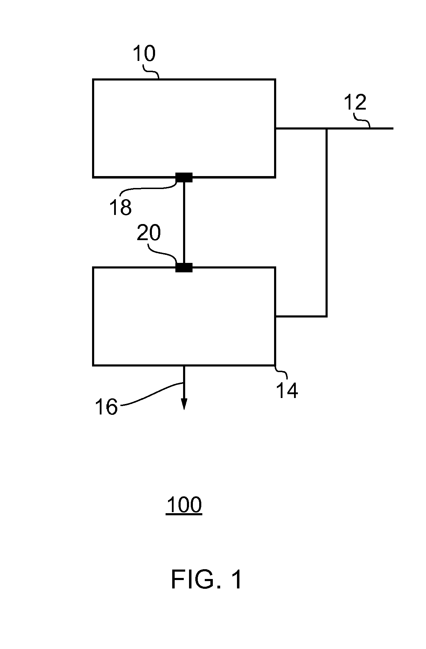

Figure 1 shows an example of a timeout signal generator 100. A data input 12 is connected to non-volatile memory 10. Data input 12 can be a single serial data input or a parallel data bus. Non-volatile memory 10 can be a single non-volatile memory cell or can be a memory array. The non-volatile memory can be implemented as a flash memory or other non-volatile memory technology. The data input 12 can be connected to a watchdog 14. The watchdog 14 may be implemented for example as a programmable counter using logic design techniques known to the person skilled in the art. An output 18 of the non volatile memory 10 is connected to the enable input 20 of the watchdog 14. A timeout output 16 of the watchdog 12 is connected to an output pin 50 of the integrated circuit 300.

In use the watchdog can generate a timeout signal, which may be a pulse on the timeout output 16, at the end of a predetermined period when the watchdog is enabled by controlling the enable input 20. A further digital circuit which can be a microcontroller may be connected to the data input 12. The further digital circuit is able to prevent the timeout signal being generated by restarting the watchdog count before the timeout period expires.

The logic state of the non-volatile memory 10 is usually preserved when the power to the timeout signal generator 100 is removed, so that the next time the timeout signal generator 100 is powered up, watchdog 14 remains either enabled or disabled until the state of the non volatile memory 10 is changed by writing to the non-volatile memory using the data input 12.

The data input 12 can be configured for any suitable bus such as a serial peripheral interface bus, I2C, USB, SCI, or parallel bus protocols such as AMBA peripheral bus.

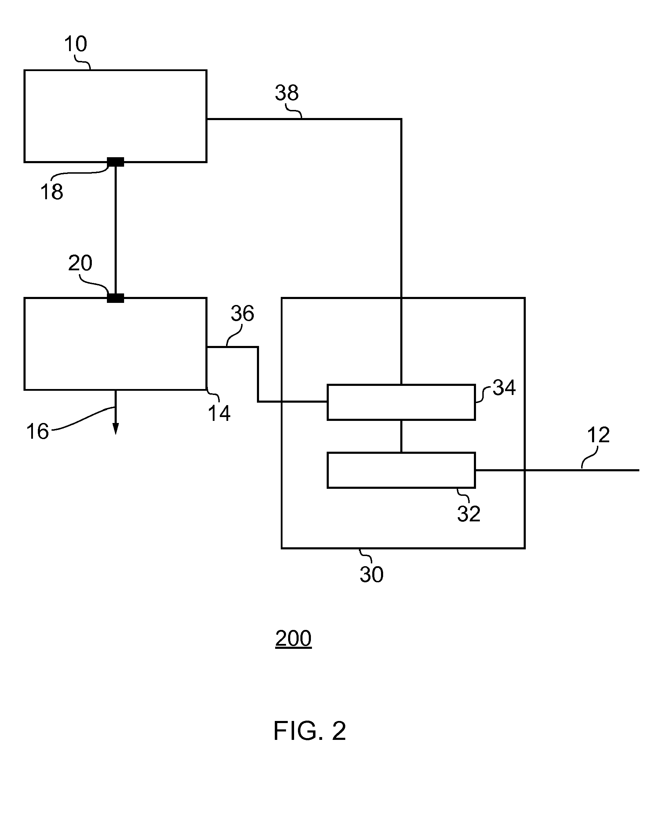

Figure 2 shows timeout signal generator 200. A data input 12 is connected to controller 30. The controller 30 includes a control interface 32 which can be connected to the data input 12. Control interface 32 is connected to register interface 34. Register interface 34 is connected to the non-volatile memory 10 by connection 38. Connection 38 can be a single connection or a bus connection. Register interface 34 is connected to watchdog 14 by connection 36. Connection 36 can be a single bit connection or a bus connection.

In use, when the watchdog is enabled by controlling the enable input 20, the watchdog can generate a timeout signal which may be a pulse on the timeout output 16 at the end of a predetermined period. A further digital circuit which can be a microcontroller may be connected to the data input 12. The data sent by the further digital circuit can be received by the controller 30. The control interface 32 can store the data in the register interface 34. The control interface may be a bus interface such as a serial peripheral bus or I2C bus designed using standard logic design techniques. Data in the register interface can be transferred to the non-volatile memory 10. Data in the register interface 34 can be transferred to the watchdog 14. The further digital circuit may prevent the timeout signal being generated by sending data to the controller 30, which then transfers the data to the watchdog 14. This data may cause the watchdog to restart the timeout period so that a timeout signal 16 is not generated. The watchdog is enabled or disabled dependent on the state of the enable input 20 which may be connected to an output 18 of the non-volatile memory 10 directly or through some other logic circuitry. The timeout signal can be used to reset the further digital circuit connected to data input 12 and other digital circuits.

The logic state of the non-volatile memory 10 is usually preserved when the power to the timeout signal generator 200 is removed, so that the next time the timeout signal generator 200 is powered up, watchdog 14 remains either enabled or disabled until the state of the non volatile memory 10 is changed by writing to the non-volatile memory using the data input 12. In other embodiments, controller 30 can read data from the non-volatile memory 10.

Non-volatile memory register interface 34 may hold the data which is written to or read from the non-volatile memory 10.

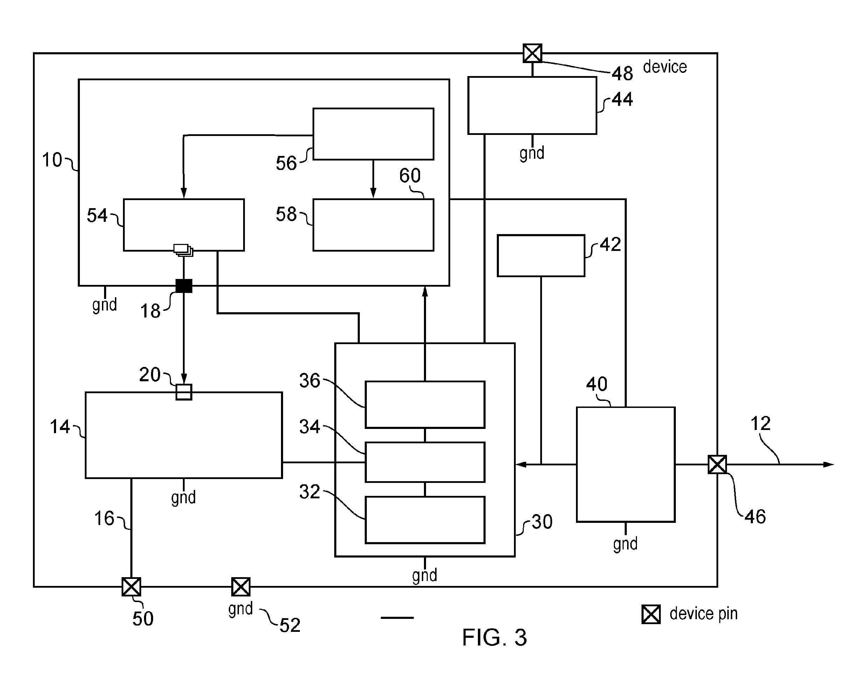

Figure 3 shows an example implementation of an embodiment of the timeout signal generator on an integrated circuit 300. Data input 12 is connected to one or more pins 46 on integrated circuit 300 and connected to an input/output circuit 40 which can include a level shifter. ESD protection circuit 42 is connected to the input/output circuit 40. Input/output circuit 40 is connected to the control interface 32 in controller 30. Control interface 30 is connected to register interface 34. Register interface 34 is connected to a digital verification circuit 36. Register interface 34 is connected to watchdog 14. The digital verification circuit 36 is connected to non volatile memory 10. Non-volatile memory 10 includes a memory bank 54. Memory bank 54 is connected to controller 30. Reference voltage and current generator 56 is connected to memory bank 54. A charge pump 60 is connected to a reference voltage and to a current generator 56. The charge pump 60 can generate a higher voltage from the available reference voltages that may be used during programming and/or erasing of the non-volatile memory. An output from the memory bank is connected to an output 18 of the non-volatile memory 10. Output 18 of the non-volatile memory 10 is connected to enable input 20 of watchdog 14. Timeout output 16 of watchdog 14 is connected to an output pin 50 of integrated circuit 300. Power pin 48 can be connected to a voltage supply block 44. A power supply output of voltage supply block is connected to non-volatile memory 10, watchdog 14 and controller 30 and input/output circuit 40. A ground pin 52 is connected to non-volatile memory 10, watchdog 14, controller 30 and voltage supply block 44.

In use when the watchdog is enabled by controlling the enable input 20, the watchdog can generate a timeout signal which can be a pulse on the timeout output 16 at the end of a predetermined period. A further digital circuit which can be a microcontroller may be connected to the data input 12. The data sent by the further digital circuit can be received by the controller 30. The control interface 32 may store the data in the register interface 34. The control interface may be a bus interface such as a serial peripheral bus or I2C bus designed using standard logic design techniques. Data in the register interface 34 can be transferred to the digital key verification circuit 36. If the data contains the digital key, then the data is transferred to the non-volatile memory 10. The digital key verification circuit 36 can be designed using standard logic design techniques to compare the data with an expected predefined key. In some embodiments the digital key verification circuit 36 can compare a digital key stored in non-volatile memory 10. The digital key may be 128 bits long.

Data in the register interface 34 may be transferred to the watchdog 14. The further digital circuit can prevent the timeout signal being generated by sending data to the controller 30, which then transfers the data to the watchdog 14. This data can cause the watchdog to restart the timeout period so that a timeout signal is not generated on the timeout output 16. The watchdog can be enabled or disabled dependent on the state of the non-volatile memory bank 54 which controls the enable input 20. The timeout signal can be used to reset the further digital circuit connected to data input 12 and other digital circuits.

Further embodiments include, for example, a microcontroller integrated together with a timeout signal generator in an integrated circuit. In embodiments, the non-volatile memory may be implemented in any suitable technology including but not limited to EEPROM, Flash, MRAM and FRAM. The timeout signal generator may be used in systems where fail-safe performance is desirable. Further embodiments include a timeout signal generator incorporated into an anti-lock braking system. Other embodiments include an engine management system, or a gear control system. Other embodiments can be included in motor vehicles. The term motor vehicle as used in this description includes but is not limited to a motor cycle, car, bus, train, truck, lorry or van.

Herein is described a timeout signal generator 100 which includes a watchdog 14 used to generate a reset signal after a timeout period unless the timeout period is restarted by a further digital circuit which is typically a microcontroller or microprocessor. The watchdog 14 can be enabled during normal operation or disabled, typically during software development of a system including the watchdog or during the programming of the microcontroller. This is conventionally done by connecting the enable signal to a dedicated pin or multiplexing the pin. A dedicated pin can increase the cost of the timing signal generator. Multiplexing the pin can result in transients which may unintentionally disable the watchdog. A timeout signal generator is described which includes a non-volatile memory to control the enable / disable line of the watchdog 14.

## Claims

1. A timeout signal generator for resetting a digital circuit, the timeout signal generator comprising:
a non-volatile memory,
a watchdog coupled to the non-volatile memory, wherein
the watchdog is configured to be either enabled or disabled dependent on a logic state of the non-volatile memory.

2. A timeout signal generator according to claim 1 further comprising
a controller coupled to the non-volatile memory, wherein
the controller is configured to change the logic state of the non-volatile memory.

3. A timeout signal generator according to claim 2, the controller further comprising
a register interface configured to be programmed from a further digital circuit,
wherein
the controller is configured to receive enable/disable command data from the further digital circuit, store the data in the register interface and alter the logic state of the non-volatile memory.

4. A timeout signal generator according to claim 3, wherein the controller is configured to read the logic state of the non-volatile memory.

5. A timeout signal generator according to claim 3 or 4, the controller further comprising a control interface coupled to the register interface wherein the control interface is configured to receive enable/disable command data from the further digital circuit.

6. A timeout signal generator according to claim 5, wherein the control interface is configured to be coupled to a serial peripheral interface bus.

7. A timeout signal generator of any of claims 2 to 6, wherein the controller further comprises
a digital key verification circuit configured to block access to the non-volatile memory when the enable/disable command data does not include a digital key.

8. A timeout signal generator of any of claims 3 to 6 wherein the further digital circuit comprises a microcontroller.

9. An integrated circuit comprising the timeout signal generator of any preceding claim.

10. An engine management system comprising the integrated circuit of claim 9.

11. A gearbox control system comprising the integrated circuit of claim 9.

12. A motor vehicle comprising the integrated circuit of claim 9.

13. A method of controlling a timeout signal generator comprising a non-volatile
memory and a watchdog coupled to the non-volatile memory, the method comprising
configuring the non-volatile memory to a first state, wherein the first state enables the watchdog.

14. The method of claim 13 further comprising
configuring the non-volatile memory to a second state, wherein the second state disables the watchdog.

15. The method of claims 13 or 14 wherein the timeout signal generator further
comprises
a controller coupled to the non-volatile memory configured to store enable/disable command data in the non-volatile memory, the controller comprising a digital key verification circuit, wherein
the method further comprises
configuring the non-volatile memory to a one of the first state or the second state only when the enable/disable command data contains the digital key.
